# EUROPEAN PATENT APPLICATION

(11) **EP 4 761 225 A1**
(43) Date of publication of application: **17.06.2026**
(21) Application number: 25222434.0
(22) Date of filing: 11.12.2025
(51) Int. Cl.: H04N 1/00, H04N 1/54, G06T 7/00, B41F 33/00, H04N 1/407, B41J 2/21, B41J 11/00, H04N 1/60, B41J 3/407

(54) **PRINTING INSPECTION SYSTEM, AND METHOD THEREFORE**

(30) Priority: 12.12.2024 EP 24219469
(71) Applicant: Tetra Laval Holdings & Finance S.A., 1009 Pully (CH)
(72) Inventor: TARCZAL, Ferenc, 221 86 Lund (SE); OLSSON, Sverker, 221 86 Lund (SE)
(74) Representative: Tetra Pak Patent Attorneys

(57) **Abstract**

Method for quality inspection of a printed paperboard web (10), the method comprising:
feeding (S2) a printed paperboard web (10) continuously in a machine direction (MD),
providing (S3) a master image (01a) using a first device (23a),
generating (S40) a color managed master image (01b) by performing color management of the master image (01a),
capturing (S5) a test image (12a) of a subsection (12) of the paperboard web (10) using a second device (23b),
determining (S6) the print quality of the paperboard web (10) by comparing the test image (12a) with the color managed master image (01b).

## Description

### Technical Field

The invention relates to a system and method for quality inspection of a printed paperboard web.

### Background Art

Packaging containers of the single use disposable type for liquid foods are often produced from a laminated packaging material. The laminated packaging material is produced as a continuous web, which is either used in a roll-fed filling machine or cut into separate blanks for use in a blank-fed packaging machine.

The laminated packaging material is produced using a converting procedure in which multiple materials are joined and processed to form the ready-to-use web of laminated packaging material.

During the converting process a paperboard web, forming the core layer of the laminated packaging material, may be digitally printed with an image on the outside (i.e. the side intended as the exterior side of the laminated packaging material) for example by ink-jet printing.

Defects may arise during printing. It is important to be able to detect such defects in order to ensure a desired quality of the packaging material web and optimum print quality performance of the digital printing process.

Printing inspection techniques, wherein an image of the printed paperboard web is compared to a master image, are known. The master image may either be a computer generated image adhering to a file format such as PDF, or an image captured from a predetermined section of the paperboard web. The quality of the print is determined based on potential discrepancies between the image of the print and the master image.

Discrepancies between a captured image of the print and a computer generated master image may however arise from factors not related to the quality of the print. A white color in a PDF may for instance appear as absolute white, while a printed white color may appear darker than absolutely white. Hence, a quality inspection based on a comparison between a captured image of the print and the master image may fail due to the difference in color.

Thus, there is a need in the art for improvements of quality inspection techniques for printing laminated packaging material webs.

### Summary

It is an object of the invention to at least partly overcome one or more of the above-identified limitations of the prior art. In particular, it is an object to provide an accurate and efficient method for detecting printing defects on a printed paperboard web. This object is at least partly addressed by means of color management, herein sometimes referred to as CM. Color management may be described as the process of ensuring consistent and accurate colors across various devices, such as monitors, printers, and cameras. Different devices may have different color capabilities and characteristics. For example, a monitor may display colors differently than a printer can reproduce them, and the colors of a capture of the print may reproduced in yet another way, leading to inconsistencies and inaccuracies when comparing. To achieve color management, a color profile may be created for each device involved in the color workflow. A color profile may be defined as a set of data that characterizes a color space, a color input device or a color output device. Color profiles may adhere to standards promulgated by the International Color Consortium and may sometimes be referred to as ICC profiles. Color profiles may describe the color attributes of a particular image file or device by defining a mapping between a source or target color space and a profile connection space, PCS. A color space may be defined as a specific organization of colors. In printing related processes and techniques, it is common to create colors with color spaces based on the CMYK color model, using the subtractive primary colors of pigment (cyan, magenta, yellow, and black). To create a three-dimensional representation of a given color space, the amount of magenta color can be assigned to the representation's X axis, the amount of cyan to its Y axis, and the amount of yellow to its Z axis. The resulting 3-D space provides a unique position for every possible color that can be created by combining those three pigments. The color profile may describe the device's color capabilities and characteristics, such as its color gamut and color temperature. The color profiles may then be used to translate colors between devices or image files, facilitating consistent and accurate color reproduction. Color management may enable a maintained color consistency throughout an entire workflow, from displaying an image, to printing it, capturing it, displaying the captured image etc. Color management may further facilitate comparison between images throughout the workflow, as irrelevant inconsistencies may be reduced and relevant discrepancies may be given prominence. When inspecting the quality of a print for instance, inconsistencies related to color representation may be ignored will retaining the full integrity of the design content, text, objects, images and other elements of the print. In the present application, color management is defined in a broad sense. For instance, processing images with print simulation is herein comprised in the term color management. As an example, features related to a print substrate such as structures, patterns or color variations may be overlaid on a computer generated image in order to facilitate comparison with the digitally created image and a capture of a print on the print substrate.

According to an aspect, a method for quality inspection of a printed paperboard web is provided. The method comprises feeding a printed paperboard web continuously in a machine direction, providing a master image using a first device, generating a color managed master image by performing color management of the master image, capturing a test image of a subsection of the paperboard web using a second device, and determining the print quality of the paperboard web by comparing the test image with the color managed master image.

The above solution provides for an accurate and efficient method for detecting printing defects on a printed web of packaging material.

The first device may be a computer and the master image may be a computer generated image.

The first device may be a camera and the step of providing the master image may comprise capturing the master image of a master subsection of the paperboard web.

The master image may be provided prior to the step of capturing the test image.

The method may further comprise printing the paperboard web using a digital printing technique.

The provided master image may comprise an embedded color profile. The color profile may describe the color capabilities and characteristics of a specific device (e.g. the second device), such as its color gamut and color temperature. The color profiles may then be used to translate colors between devices or image files, facilitating consistent and accurate color reproduction. The master image may comprise metadata, allowing color profiles to be embedded into the images in an efficient and robust manner.

The color profile may be used to characterize the colors of the master image, as each color profile describes colors relative to a standardized set of reference colors, also referred to as the profile connection space. By comprising an embedded color profile, the colors of the master image can be translated to a target profile, facilitating the comparison between the test image and the master image, thereby allowing an efficient and accurate print quality inspection.

The step of generating a color managed master image may comprise the step of providing a color profile for the first device.

The step of generating a color managed image may comprise providing a color profile for the second device.

The step of generating a color managed image may comprise converting colors of the master image by referencing color profile data.

The step of determining the print quality may comprise generating a color managed test image by performing color management of the test image.

According to another aspect a converting unit is provided. The converting unit is configured to continuously manufacture a laminated packaging material. The converting unit comprises a feeding unit configured to continuously forward a printed paperboard web in a machine direction, an inspection unit comprising a first device and a second device, said inspection unit being configured to capture a test image of a subsection of the paperboard web using the second device and to compare the test image with a color managed master image provided by the first device.

The inspection unit may be further configured to generate the color managed master image by performing color management of the master image.

The inspection unit may further comprise a color management module configured to generate the color managed master image.

The converting unit may further comprise a printer unit configured to print the paperboard web.

The printer unit may comprise a digital printing device.

According to an aspect, a method for quality inspection of a printed paperboard web is provided. The method comprises feeding a printed paperboard web continuously in a machine direction. The method further comprises providing a master image, generating a color managed master image by performing color management of the master image, and capturing a test image of a subsection of the paperboard web. By determining the quality based on a captured test image, a more accurate quality control can be achieved than what is achieved by human visual inspection of the printed paperboard web. By performing color management, the color features of the master image which are not related to the quality of the print may be translated to color features closer aligned with the test image. Thus, a more efficient quality inspection may be enabled. The method further comprises determining the print quality of the paperboard web by comparing the test image with the color managed master image. By comparing the test image with the color managed master image instead of a raw master image, a more accurate and efficient quality inspection is ensured as irrelevant discrepancies are reduced in favor for the prominence of discrepancies related to the quality of the print. Further, using a color managed master image as reference instead of an unmodified capture of the actual or previous production is beneficial, as an unmodified capture may contain an unnoticed defect which when compared to a non-defective production may result in the non-defective production being reported as defective. Further, if the unmodified capture used as a reference and the test image comprises the same defect, the defective production may be reported as non-defective.

Advantageously, the method eliminates the need for a dedicated test pattern printed on the paperboard web, improving the visual impression of the final product.

According to an embodiment, the master image is a computer generated image. The computer generated image may adhere to a file format such as TIFF, JPEG, PNG, EPS, PDF, and SVG. The image may comprise metadata, allowing color profiles to be embedded into the images, and further allowing efficient storage in a database or a profile directory. If the paperboard web is digitally printed, a digital-based image used for printing may also be used as a master image for quality inspection.

According to an embodiment, the step of providing the master image comprises capturing the master image of a master subsection of the paperboard web. By capturing the master image of a subsection of the paperboard web, a simple process for generating a master image is enabled. The master image may be provided prior to the step of capturing the test image.

The different subsections may comprise the same printed image, and the test images may each be compared to the master image, ensuring maintained quality during the printing process. More than one master image may be provided. The master imaged may be stored in a master image library. More than one test image may be captured from different subsections of the paperboard web. Quality may be inspected in a static printing process, i.e. printing a repetitive pattern of the same image. For dynamic printing, i.e. printing variable images after each other on the same roll, quality may be inspected by providing several master images, each comprising one of the variable images, and capturing several test images across the roll. Each of the captured test images may be compared to the corresponding master image. Alternatively, a single master image may be used for quality inspection of a dynamic printing process, and sample images of the same image motif as the master image throughout the roll may be compared to the master image.

According to one embodiment, the method further comprises printing the paperboard web using a digital printing technique. By this, dynamic printing, also referred to as variable printing, is enabled. By performing color management of the one or more master image in a dynamic printing process, a more accurate and efficient quality inspection is allowed, as the same or similar translation of colors may be performed on all master images. Using multiple unmodified master images as a reference would multiple the risk of inaccurate quality determination, and processing each master image individually would add processing time and result in no inspection until the master image is processed. Utilizing color management enables the master images to be preprocessed, for instance using a predetermined color profile or applying a predetermined print simulation.

According to an embodiment, the provided master image comprises an embedded color profile. The color profile, as further explained above, may be used to characterize the colors of the master image, as each color profile describes colors relative to a standardized set of reference colors, above referred to as the profile connection space. By comprising an embedded color profile, the colors of the master image can be translated to a target profile, facilitating the comparison between the test image and the master image, thereby allowing an efficient and accurate print quality inspection.

According to an embodiment, the master image is provided by a first device, and the step of generating a color managed master image comprises the step of providing a color profile for the first device. The first device may comprise a computer, capable of generating digital images. Additionally or alternatively, the first device may comprise a capturing device, such as a camera, and the master image may be generated by capturing an image of a subsection of the paperboard web. The first device may comprise a device specific color profile, provided by the manufacturer. Alternatively, or additionally, color profile may be generated for the first device using for instance a tristimulus colorimeter or a spectrophotometer. Analogously with what is described above, the color profile of the first device may be mapped from a color space to the PCS, and from the PCS to a color space. The color profile might do this using tables of color values to be interpolated, or using a series of mathematical formulae.

According to an embodiment, the test image is captured by a second device, and the step of generating a color managed image comprises providing a color profile for the second device. The second device may comprise a camera, such as a web camera.

According to an embodiment, the step of generating a color managed image comprises converting colors of the master image by referencing color profile data, such as color profile data related to the master image, the first device, and/or the second device.

According to an embodiment, the step of determining the print quality comprises generating a color managed test image by performing color management of the test image. By this, irrelevant discrepancies may be further reduced, facilitating a more accurate and efficient quality inspection as discrepancies related to the quality of the print may be enhanced in relation to the irrelevant discrepancies.

According to an aspect, a converting unit, configured to continuously manufacture a laminated packaging material, is provided. The converting unit comprises a feeding unit configured to continuously forward a printed paperboard web in a machine direction, preferably at a constant speed. The converting unit further comprises an inspection unit configured to capture a test image of a subsection of the paperboard web and to compare the test image with a color managed master image. The converting unit may be configured to perform the continuous in-line method for quality inspection described herein and therefore implies all aspects disclosed with regard to that method.

According to an embodiment, the inspection unit comprises a first device configured to provide a master image, and the inspection unit is further configured to generate the color managed master image by performing color management of the master image. The first device may comprise a computer, configured to generate the master image. Additionally, or alternatively, the first device may comprise a capturing device, such as a camera, configured to generate the master image by capturing an image of a subsection of the paperboard web.

According to an embodiment, the inspection unit further comprises a second device configured to capture the test image, and a color management module, CMM configured to generate the color managed master image. The second device may comprise a capturing device, such as a camera, preferably a web camera. The first and second device may be distinct devices or refer to the same device, such as the same capturing device.

According to an embodiment, the converting unit further comprises a printing unit configured to print the paperboard web.

According to an embodiment, the printing unit comprises a digital printing device, such as an ink-jet printer.

The converting unit may further comprise a creasing station configured to provide a crease line pattern to the printed paperboard web, and/or at least one lamination station configured to laminate at least a further layer to the printed and creased paperboard web.

All possible features mentioned above should be assumed as valid for all aspects of the invention, as long as being under the scope of the claims. Still other objectives, features, aspects and advantages of the invention will appear from the following detailed description as well as from the drawings.

### Brief Description of the Drawings

Embodiments of the invention will now be described, by way of example, with reference to the accompanying schematic drawings.
Fig. 1 is a schematic view of a converting unit according to an embodiment.
Fig. 2 is a top view of a converting unit according to an embodiment.
Fig. 3 is a flowchart of a method according to an embodiment.

### Detailed Description

A package, such as a liquid food or beverage container, is formed by folding blanks of a laminated packaging material. The packaging material is typically manufactured in a manufacturing unit, such as a converting unit. During the manufacturing process, a substrate may be printed, and after a series of process steps, eventually forming part of the laminated packaging material. In the following description, the substrate is referred to as a paperboard material. To inspect the quality of the print and detect eventual defects, an in-line method and system for quality inspection is provided, which will be described in the following.

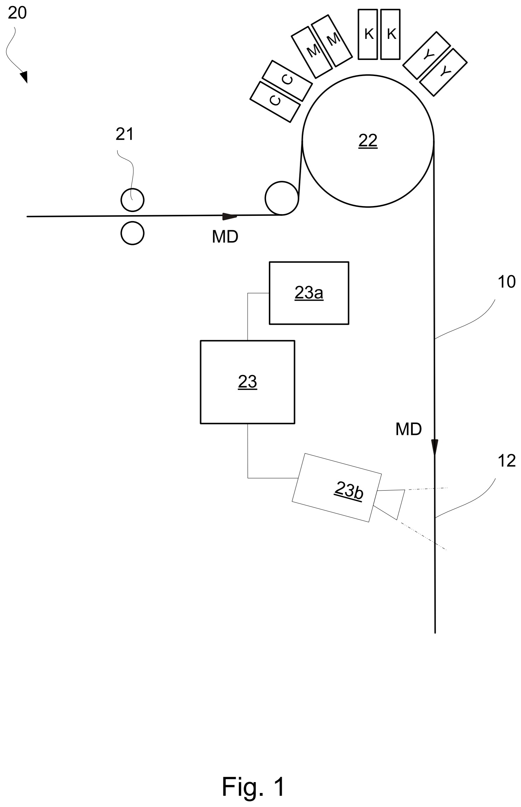

With reference to Fig. 1 a converting unit 20 configured to manufacture a laminated packaging material web is illustrated. The converting unit 20 comprises at least one feeding unit 21, here illustrated as two feeding rolls. The feeding unit(s) 21 is configured to continuously forward a paperboard web 10 in a machine direction MD as indicated by the arrow markings in Fig. 1, preferably at a substantially constant speed.

The converting unit 20 in the illustrated example further comprises a printer unit 22, here illustrated as an ink-jet printer having a support cylinder and a plurality of print heads for cyan C, magenta M, yellow Y and black K. Alternatively, different inkjet configurations may be possible, such as print heads in an arch or in a linear layout (not illustrated). It should be noted that the exact configuration of the printer unit 22 may be different depending on the particular application; for example, the printer unit 22 may comprise a flexographic printer. The printer unit 22 is configured to print a series of images on the paperboard web 10. The series of images may comprise a repeating pattern of the same image, so called static printing, or variable images after each other, i.e. dynamic printing.

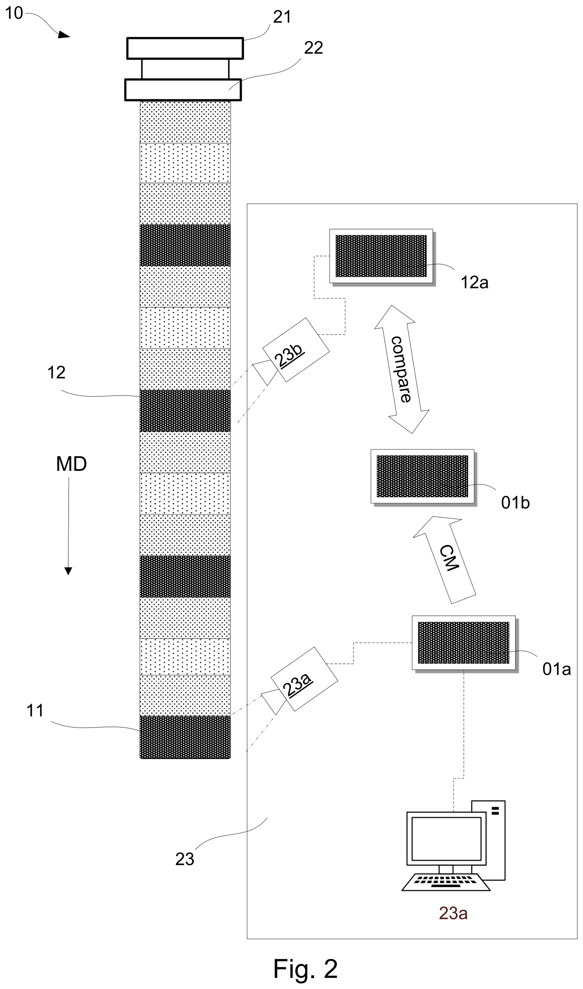

Fig. 2 illustrates parts of a converting unit 20 in a top view. Here, the feeding unit 21 forwards the paperboard web 10 in a machine direction MD, as indicated by an arrow in the figure. The printed paperboard web 10 is commonly divided into a plurality of paperboard web subsections, which subsections may represent at least parts of a packaging material intermediate for provision of packages. The subsections may also be referred to as blanks from which a package is to be formed, especially if the web of packaging material later is cut into individual sections for a blank-fed packaging machine. The subsections 11,12 illustrated In Fig. 2 may correspond to different parts of the blank and the package to be formed, preferably separated by crease lines. The crease lines may for instance be formed in a creasing unit (not illustrated) of the converting unit 20. Alternatively, the subsections 11, 12 herein may correspond to larger sections than the blanks. Commonly, a test pattern is printed on each section of the web, either on a section that is cut off before forming the package which increases complexity of the process, or on a section that will be visible on the formed package, reducing the visual impression of the final product. Advantageously, the quality inspection method as described herein allows for inspection of the print quality without requiring a dedicated test pattern to be printed on the paperboard web.

As illustrated in Fig. 1 and Fig. 2, downstream of the printer unit 22, the converting unit 20 further comprises an inspection unit 23. The inspection unit 23 in the illustrated examples comprises a first device 23a configured to provide a master image 01a. The first device 23a may for instance be a computer or a capturing device, as illustrated in Fig. 2, and the master image 01a may be a computer generated image or a captured image. In particular, in one example the first device 23a is a computer and the master image 01a is a computer generated image. In another example the first device 23a is a capturing device, such as a camera, and the master image 01a is a captured image.

The inspection unit 23 is further configured to generate a color managed master image 01b by performing color management of the master image 01a. The color managed master image 01b may be generated by a color management module (not illustrated) provided in, or in conjunction with (such as remote from) the inspection unit 23. The inspection unit 23 further comprises a second device 23b configured to capture a test image 12a of a subsection 12 of the paperboard web 10. The second device is illustrated as a camera in Figs. 1 and 2. The subsection 12 may comprise an image of the series of printed images. The inspection unit 23 is configured to compare the test image 12a with the color managed master image 01b. The color managed master image 01b preferably comprises the same image motif as the image motif printed on the subsection 12. The first device 23a may be configured to capture or represent more than one master image 01a, and the second device 23b may be configured to capture more than one test image 12a. The first device 23a may be positioned to measure a subsection 11 to provide the master image 01a, which is provided prior to a subsequent subsection 12, which may be measured by a second device 23b to capture the test image 12a. As an example, the second device 23b may capture test images 12a of sampled subsections 12 throughout the paperboard web 10.

The web 10 of packaging material is, as described above and with reference to Fig. 2, formed by a series of consecutive sections where each section is intended to form an individual packaging container. Each section is provided with a printed décor and such décor may in turn be formed by a series of separate graphical elements. A graphical element present on one section is preferably repeated for every section that follows, on the web 10 of packaging material.

In such example, one specific graphical element may be selected as a subsection 11, 12 of the web 10 of packaging material to be monitored. As the subsection 11, 12 is constant and repeating, it is possible to monitor the same graphical element inline and throughout the manufacturing process, while using the same color managed master image 01b as the reference.

Although the first and second devices 23a, 23b are illustrated as two distinct devices, it should be noted that they may refer to the same device 23a, 23b. For instance, the same capturing device 23a, 23b may be used to first capture the master image 01a, and later the test image 12a. In other embodiments the inspection unit 23 may comprise other means for visual inspection.

A controller (not illustrated) may be provided in, or in conjunction with (such as remote from), the converting unit 20 to control the operation of the inspection unit 23. For instance, the controller may be a digital processing unit or the like. The controller may also be in electronic communication with the feeding unit(s) 21 as well as the printer unit 22 to control their respective function.

The inspection unit 23 or the controller may be configured to analyze the test image 12a from the inspection unit 23 by comparing it with the color managed master image 01b, the color managed master image 01b may simulate a reference image of 100% well-functioning printer unit 22. If the test image 12a comprises deviations from the color managed master image 01b, these deviations are processed and analyzed in order to determine errors in the manufacturing process. The errors may be associated with defects in the printer unit 22 or other units of manufacturing process.

Before comparing the test image 12a with the color managed master image 01b, the test image 12a and/or the color managed master image 01b may be further modified or processed.

By comparing the test image 12a with a master image 01a, 01b, the inspection unit 23 is allowed to inspect the quality of the print. For instance, the inspection unit 23 may analyze different characteristics of the test image compared to the master image, such as color, continuity, opacity, color intensity, blurriness, etc., enabling an in-line defect inspection system able to detect errors in the printing process. By comparing the test image 12a with a color managed master image 01b, a more accurate and efficient defect inspection system is enabled. Natural discrepancies between a raw master image 01a and a captured test image 12a of a print on a print substrate, such as a paperboard web 10, that do not relate to a printing defect may be reduced. As an example, the background of an image motif may appear as transparent or absolute white on a raw master image 01a, but paperboard colored or a different structure or shade of white when printed and captured. This is not an undesired defect, but rather a natural occurrence when printing from a digital file. When color managing the master image 01a it is possible to translate the background color to simulate the printed background color on the substrate. By using the color managed master image 01b as reference, erroneous indications of defects may be reduced, while allowing a more accurate inspection of the real undesired potential defects, such as defects in the design content, text, objects, images and other elements of the print. Hence, the quality inspection is not only more accurate, but also more efficient.

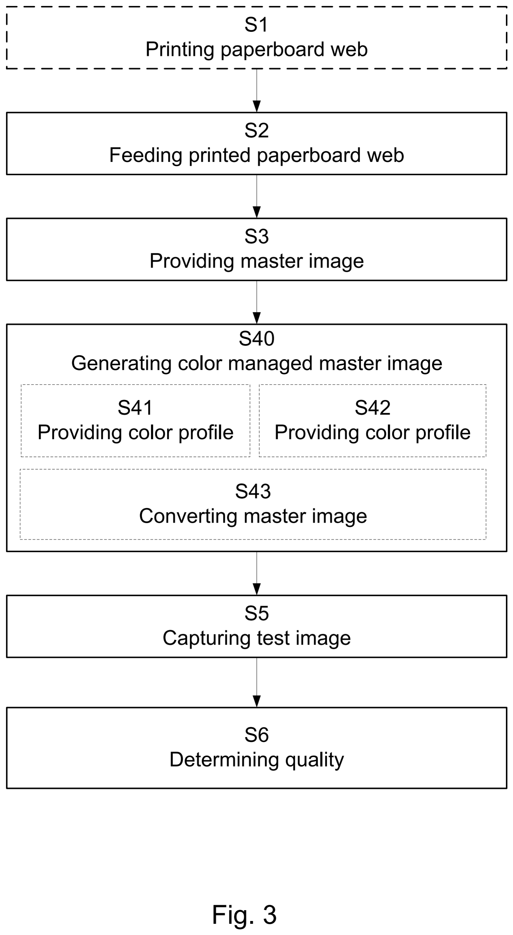

Turning now to Fig. 3 an embodiment of a continuous in-line method for quality inspection of a series of printed images on a paperboard web 10 is illustrated. The method may be performed in the converting unit 20 as described above. Conversely, the converting unit 20 is configured to perform the method as will now be described. Moreover, all aspects disclosed with regard to the method may be implied also for the converting unit 20, as well as the other way around.

The method includes an optional step of printing S1 the paperboard web 10, preferably using a printer unit 22, the printer unit 22, preferably comprising a digital printing device, such as an ink-jet printer. During ink-jet printing, a digital image is recreated by propelling droplets of ink onto a substrate, such as a paperboard web 10 or a primer layer (not shown) on a paperboard web 10. The method may further comprise other printing techniques, such as flexographic printing, and the paperboard web 10 may hence be printed by ink-jet printing only, or by a hybrid approach combining two or more printing techniques. In other words, paperboard web 10 may be ink-jet printed and flexography printed. The paperboard web 10 may comprise paper, paperboard or other cellulose-based material.

The paperboard web 10 is fed S2 in a machine direction MD continuously, preferably at a substantially constant speed. The machine direction MD may be defined as the direction parallel to the movement of the paperboard web 10 through a manufacturing equipment such as a converting unit 20, or as the circumferential direction of a roll of paper used for providing the paperboard web 10.

Next, a master image 01a is provided S3. The master image 01a may be captured, or it may be computer generated. The master image 01a may be provided by a first device 23a as further discussed above. Alternatively, the master image may be provided by other means. A digital-based image used for printing in the printing step S1 may be used as a master image for quality inspection.

Color management is performed of the master image 01a, thereby generating S40 a color managed master image 01b. Generating S40 a color managed master image 01b may comprise several processes as discussed throughout the present application. For instance, a white area of a digitally generated master image may be conversed to match with the appearance of white ink printed on paperboard. The master image 01a may comprise an embedded color profile. Alternatively, or additionally, a color profile for the first device 23a providing the master image 01a may be provided S41. The step of generating S40 a color managed image 01b may comprise converting S43 colors of the master image 01a by referencing color profile data, such as color profile data from the master image 01a or the first device 23a providing the master image 01a.

The method further comprises capturing S5 a test image 12a of a subsection 12 of the paperboard web 10, preferably by a second capturing device 23b. Analogously with the master image 01a, the test image 12a may comprise an embedded color profile, and/or a color profile for the second capturing device 23b may be provided S42. The step of generating S40 a color managed image 01b may comprise converting S43 colors of the master image 01a and/or the test image 12a by referencing color profile data, such as color profile data from the master image 01a, the test image 12a, the first device 23a or the second device 23b. The colors of the master image 01a and/or the test image 12a may be translated relative a profile connection space.

The quality of the print quality is determined in a step S6 where the test image 12a is compared with the color managed master image 01b.

From the description above follows that, although various embodiments of the invention have been described and shown, the invention is not restricted thereto, but may also be embodied in other ways within the scope of the subject-matter defined in the following claims.

## Claims

1. Method for quality inspection of a printed paperboard web (10), the method comprising:
feeding (S2) a printed paperboard web (10) continuously in a machine direction (MD),
providing (S3) a master image (01a) using a first device (23a),
generating (S40) a color managed master image (01b) by performing color management of the master image (01a),
capturing (S5) a test image (12a) of a subsection (12) of the paperboard web (10) using a second device (23b),
determining (S6) the print quality of the paperboard web (10) by comparing the test image (12a) with the color managed master image (01b).

2. Method according to claim 1, wherein the first device (23a) is a computer and wherein the master image (01a) is a computer generated image.

3. Method according to claim 1, wherein the first device (23a) is a camera and wherein the step of providing (S3) the master image (01a) comprises capturing the master image (01a) of a master subsection (11) of the paperboard web (10).

4. Method according to any one of the preceding claims, wherein the master image (01a) is provided (S3) prior to the step of capturing (S5) the test image (12a).

5. Method according to any one of the preceding claims, further comprising printing (S1) the paperboard web (10) using a digital printing technique.

6. Method according to any one of the preceding claims, wherein the provided master image (01a) comprises an embedded color profile.

7. Method according to any one of the preceding claims, wherein the step of generating (S40) a color managed master image (01b) comprises the step of providing (S41) a color profile for the first device (23a).

8. Method according to any one of the preceding claims, wherein the step of generating (S40) a color managed image (01b) comprises providing (S42) a color profile for the second device (23b).

9. Method according to any one of the preceding claims, wherein the step of generating (S40) a color managed image (01b) comprises converting (S43) colors of the master image (01a) by referencing color profile data.

10. Method according to any one of the preceding claims, wherein the step of determining (S6) the print quality comprises generating a color managed test image (12b) by performing color management of the test image (12a).

11. A converting unit (20) configured to continuously manufacture a laminated packaging material, comprising a feeding unit (21) configured to continuously forward a printed paperboard web (10) in a machine direction (MD), an inspection unit (23) comprising a first device (23a) and a second device (23b), said inspection unit (23) being configured to capture a test image (12a) of a subsection (12) of the paperboard web (10) using the second device (23b) and to compare the test image (12a) with a color managed master image (01b) provided by the first device (23a).

12. The converting unit (20) according to claim 11, wherein the inspection unit (23) is further configured to generate the color managed master image (01b) by performing color management of the master image (01a).

13. The converting unit (20) according to claim 11 or 12, wherein the inspection unit (23) further comprises a color management module configured to generate the color managed master image (01b).

14. The converting unit (20) according to any one of claims 11-13, further comprising a printer unit (22) configured to print the paperboard web.

15. The converting unit (20) according to claim 14, wherein the printer unit (22) comprises a digital printing device.
